# EUROPÄISCHE PATENTSCHRIFT

(11) **EP 0 486 549 B1**
(45) Veröffentlichungstag und Bekanntmachung des Hinweises auf die Patenterteilung: **12.05.1993**
(21) Anmeldenummer: 90911922.4
(22) Anmeldetag: 16.08.1990
(51) Int. Cl.: G06K 19/06, G06K 19/04

(54) **KENNZEICHNUNGSEINRICHTUNG MIT CODEMARKIERUNGEN AUFWEISENDEN DATENTRÄGERN**
IDENTIFICATION DEVICE WITH DATA STORAGE MEANS FOR CODE MARKINGS
DISPOSITIF D'IDENTIFICATION AVEC SUPPORTS DE DONNEES PRESENTANT DES MARQUAGES CODES

(30) Priorität: 17.08.1989 DE 3927195
(43) Veröffentlichungstag der Anmeldung: 27.05.1992
(73) Patentinhaber: SONNTAG, Günter, D-70439 Stuttgart (DE)
(72) Erfinder: SONNTAG, Günter, D-70439 Stuttgart (DE)
(74) Vertreter: Schuster, Gregor, Dipl.-Ing.
(86) Internationale Anmeldenummer: DE9000630
(87) Internationale Veröffentlichungsnummer: WO9103027

(56) Entgegenhaltungen:
- WO-A-83/04446
- CH-A- 457 924
- US-A- 3 711 683

## Beschreibung

Die Erfindung geht aus, von einer Kennzeichnungseinrichtung mit Codemarkierungen aufweisenden Datenträgern nach der Gattung des Hauptanspruchs. Bei einem bekannten gattungsgemäßen Datenträger, wie er in der US PS 3 711 683 beschrieben ist, kann einer der beiden Datenträger durch eine, auch lösbare,Klebeverbindung auf dem anderen Datenträger angeordnet werden, sodaß der zweite Datenträger im Prinzip an einer beliebigen Stelle angeordnet werden kann. Hierdurch besteht die Gefahr, daß die in den Datenträgern enthaltene Information verfälscht, wenn nicht sogar unlesbar gemacht werden kann zwar ist auch bei diesem Stand der Technik angestrebt, eine richtige relative räumliche Anordnung zu erhalten, jedoch fehlt die maßnahme, die diese Anordnung gewährleistet.

Es sind zudem Datenträger zirkulärer Form bekannt, bei denen auf einer Kreisscheibe durch einen optisch lesbaren Binärcode Informationen gespeichert sind, die ein Preis, aber auch eine Postversandtadresse oder sonstige, den Gegenstand betreffende Daten sein können. Durch die zirkuläre Form des Datenträgers wird das Ablesen oder Abtasten der Daten wesentlich vereinfacht, da der Lesekopf der Lesegeräte meist willkürlich in die Lesestellung gebracht wird und die mögliche Lesestellung von nicht vorherbestimmbaren zufällen abhängt. Bei einem anderen bekannten, in der DE-PS 23 28 821 beschriebenen Datenträger zirkulärer Form, sind Informationen von Daten unterschiedlicher Aussagegruppen mit Hilfe von Symetrieachsen auf den zirkulären Datenträger orientiert, um so Ablesefehler zu vermeiden. Unter einer Aussagegruppe ist hier eine Aussage über entweder Inhalt oder Alter, menge usw. gemeint. Eine Aussagegruppe können die Prüfdaten oder Prüffristen sein, eine andere die Giftanteile des Inhalts usw..

Bei diesen bekannten Kennzeichnungseinrichtungen sind auf einem Datenträger sämtliche Daten, also eine Kombination von verschiedenen Aussagegruppen, angeordnet. Bei gleichen Gegenständen verschiedenen Typus oder Einsatzes sind jedoch entsprechend unterschiedliche Daten zu speichern. Beispielsweise Füllmenge oder Inhalt bei gleichen Behältern oder vom Inhalt abhängige Überprüfungszeiträume usw., so daß durch die verschiedenen, unterschiedlich erforderlichen Aussagegruppen und gegebenen Kombinationen unter diesen Aussagegruppen eine entsprechend große Anzahl von derartigen Datenträgern auf Lager gehalten werden müssen. Wenn beispielsweise vier verschiedene Informationen einer Aussagegruppe mit sechs verschiedenen Informationen einer anderen Aussagegruppe auf jeweils einem Datenträger gespeichert sind, so ergeben sich daraus vierundzwanzig verschiedene Datenträger, die auf Lager gehalten werden müssen. Am Beispiel von Kennzeichnungseinrichtungen für Gasflaschen, ergibt sich eine nur verhältnismäßig geringe Typenzahl, wenn nur das Prüfdatum oder nur das Taragewicht oder nur das Füllmedium als Information abtastbar sein muß. Sobald jedoch mehrere derartige Aussagegruppen, wie beispielsweise das Prüfdatum oder das Taragewicht, sowie möglicherweise auch noch das Füllmedium ablesbar sein müssen, ergibt sich eine entsprechend hohe Zahl unterschiedlicher Datenträger, die vorrätig sein müßten. Ein weiteres Problem ergibt sich dadurch, daß die Fristen für die wiederholte Prüfung solcher Gasflaschen beispielsweise 10 Jahre betragen kann, so daß die Datencodierung langfristig zu bewerten wäre, während andere Daten, wie das Taragewicht des jeweiligen Flascheninhalts, und zwar recht genau, beispielsweise bis auf 100 Gramm genau, eingegeben und bei Wiederauffüllung der Flasche dem jeweiligen neuen Endinhalt angepaßt werden muß. Dies erfordert jeweils einen neuen Datenträger bei dem bezüglich Prüfdatum nur noch die Restfrist berücksichtigt zu werden braucht. Hierdurch steigt die bei der Nachrüstung von derartigen Gasflaschen erforderliche Lagerhaltung zirkulärer Datenträger von weit mehr als hundert verschiedenen Informationskombinationen. Für jede zusätzliche Aussagegruppe, die enthalten sein soll, ergibt sich eine entsprechende Multiplikation der auf Lager zu haltenden verschiedenen Datenträger.

Derartige Datenträger müssen zudem eine Dauerlesbarkeit aufweisen und unempfindlich gegen Wasser, Hitze, Kälte, Schmutz oder mechanische Beschädigung sein, so daß ihre Herstellung verhältnismäßig teuer ist. Der hohe Preis schlägt natürlich auf die Kosten der Vorratshaltung durch in Form toten Materials.

Der Erfindung liegt die Aufgabe zugrunde, eine gattungsgemäße Kennzeichnungseinrichtung so zu gestalten, daß weder ein Informationsverlußt, noch eine Fehlkennzeichnung auftreten kann.

Diese Aufgabe wird dadurch gelöst, daß die richtige relative räumliche Anordnung der Datenträger zueinander zwangsweise erfolgt, mit dem Vorteil, daß eine fehlerfreie Ablesung sichergestellt ist, daß ein Informationsverlust nicht stattfinden kann, und daß keine Fehlkennzeichnung auftreten kann. Die Codemarkierungen betreffen vorteilhafterweise entweder den Gegenstand und/oder dessen Funktion bzw. Inhalt in unvertauschbarer, raumformgebundener Weise am Behälter, jedoch unabhängig nach Aussagegruppe programmierbar bzw. austauschbar. Auf diese Weise wird erreicht, daß die einander streng zugeordneten Daten für Behälter und Inhalt in der erforderlichen Weise einander zugeordnet bleiben, wobei die kürzerfristig geltenden Daten ohne weiteres als einzelne Datenträger austauschbar sind, so daß also für den jeweiligen Bedarfsfall Datenkombinationen vorgenommen werden können, ohne deshalb eine entsprechend große Lagerhaltung zu bedingen. Bei einem bevorzugten Anwendungsgebiet derartiger Kennzeichnungseinrichtungen, nämlich bei Gasflaschen, erfolgt das Ablesen der Datenträger nach Aussagegruppe getrennt, so daß beispielsweise nach Ablesen des einen Datenträgers derartige Stahlflaschen sortiert werden, um dann nach Ablesen des zweiten Datenträgers entsprechend aufgefüllt (Taragewicht) oder aussortiert zu werden (für die Prüfung einer neuerlichen Zulassung).Obwohl erfindungsgemäß die verschiedenen Datenträger nicht unmittelbar nebeneinander liegen müssen, so ist doch ihre räumliche Zuordnung unbedingt erforderlich, um dadurch einerseits die Unvertauschbarkeit und andererseits die jeweilige für die Ablesung bestimmte Lage der Datenträger fixiert zu haben.Der Datenträger kann einen optisch abtastbaren Barcode enthalten, wobei auf zwei Datenträgern, vorzugsweise zirkulärer Form, zwei verschiedene Aussagegruppen programmiert sind, von denen mindestens eine ein Barcode ist.Der Datenträger kann auch einen eingegossenen Magnetcode aufweisen. Hierdurch ist es möglich, mehrere unterschiedliche Aussagegruppen auf nur einem Ring anzubringen, auf dem, neben den an sich bekannten optisch abtastbaren Barcods als einem ersten Datenträger, Magnetspuren als zweitem Datenträger enthalten sind, die mit einem Magnetcode programmierbar sind. Abgesehen davon, daß ein solcher Magnetcode fest einprogrammiert sein kann, sind auch veränderbare Codes möglich, beispielsweise wenn Leerbehälter neu aufzufüllen sind, um dann, während oder nach dem Füllvorgang, entsprechend den Codierungen sortiert und gelagert zu werden, bzw. um entsprechend der Codierung zu Kommissionen zusammengestellt zu werden. Solche veränderbaren Magnetcodierungen können dann bei Wiedereintreffen eines geleerten Behälters neu codiert werden. Natürlich ist auch denkbar, daß ein Teil des Magnetcodes fest ist, während ein anderer Teil je nach Bedarf zeitgerecht nachprogrammiert werden kann.

Nach einer vorteilhaften Ausgestaltung der Erfindung, bei der mindestens zwei der einander zugeordneten Datenträger als Ringscheiben ausgebildet sind, deren radiale Innen- und Außenabmessungen aufeinander abgestimmt sind, ist ein Ineinanderstecken der Ringscheiben, nämlich jeweils eine kleinere Ringscheibe in die Innenöffnung einer größeren Ringscheibe ermöglicht, so daß die Ringscheiben für eine gemeinsame Ableseoberfläche unterschiedlicher Aussagegruppen eine axial stirnseitige bzw., auf der Scheibe größten Durchmessers, eine radialseitige Codemarkierung aufweisen. Auf diese Weise können bei den ineinander gesteckten Ringen jeweils unterschiedliche Aussagegruppen codiert sein, um so die Lagerhaltung von codierten Ringen zu minimieren. Hierbei kommt der Lagerhaltung entgegen, daß einer bestimmten Aussagegruppe ein Ring bestimmten Durchmessers zugeordnet werden kann, wodurch eine Verwechslung von Ringen verschiedener Aussagegruppen verhindert wird. Auch ist damit beim Ablesen eine Orientierung festgelegt, die das Umsetzen der Ablesedaten in die entgültig zur Verfügung stehenden Daten unverwechselbar macht. Grundsätzlich können diese Datenträgerringe auch am Boden einer Gasflasche angeordnet sein, beispielsweise wenn sie dort in dafür vorgesehene Stirnringnuten eingepreßt werden. Hierbei können mehrere derartige Ringscheiben ineinander gesteckt sein, es kann jedoch auch eine solche Ringscheibe einem anderen, am Ventil angeordneten zweiten Datenträger einer anderen Aussagegruppe zugeordnet sein. Es ist zwar durch die CH-A-457 924 bekannt, Ringscheiben als Datenträger zu verwenden, nur handelt es sich dort um eine völlig andere Aufgabe und Lösung, nämlich einen ringscheibenförmigen Informationsträger mit einer geometrischen Kennzeichnung der Randposition mit Informationen über Artikelnummer, Stückpreis usw..

Nach einer weiteren vorteilhaften Ausgestaltung der Erfindung sind zwischen den einander zugewandten radialen Mantel- bzw. Bohrungsflächen der Ringscheiben Wulsterhebungen und Ringnuten vorhanden, die eine ein axiales Gegeneinanderverschieben verhindernde Schnappverbindung bilden. Wenn somit der innerste Ring beispielsweise über seine zentrale Bohrung mittels des Einschraubgewindes eines Ventils festgespannt ist, können die weiteren Datenträgerringe jeweils außen eingerastet werden.

Nach einer weiteren vorteilhaften Ausgestaltung der Erfindung sind als Spiel- und Verdrehsicherung der Ringscheiben zueinander, mindestens auf den einander zugewandten radialen Mantel- bzw. Bohrungsflächen der benachbarten Ringscheiben, Nasen an einer Scheibe vorhanden, die in entsprechende Ausnehmungen der anderen Scheibe greifen. Eine solche Verdrehsicherung kann für bestimmte Ableseverfahren erforderlich sein, was einerseits die Zuordnung der Daten der beiden benachbarten Ringe zueinander betreffen kann, aber auch die Lage des Datenträgers in Bezug auf den Behälter selbst. Wenn erfindungsgemäß die Ausnehmung als den Ring unterbrechende radiale Öffnung ausgebildet ist (Anspruch 9), dann kann die Nase eine Länge aufweisen, die der Breite des Ringes entspricht, in dessen Ausnehmung sie greift. Hierdurch kann sie radial auf den nächsten Ring stoßen und so als radialer Spielausgleich dienen.

Nach einer weiteren vorteilhaften Ausgestaltung der Erfindung ist von den einander zugeordneten Datenträgern mindestens einer als zylindrisches oder konisches Datenringband ausgebildet, welches um einen entsprechend ausgebildeten Abschnitt einer Mantelfläche des Gegenstandes oder ein mit dem Gegenstand fest verbundenes Teil, wie Ventil oder Handrad, gelegt ist. Natürlich ist auch ein vielkantiges Datenringband, um einen Kreiszylinder oder kegeligen Trägerteilabschnitt legbar, oder es ist ein glattes Ringband um einen vieleckigen Abschnitt eines Trägerteils legbar. Unabhängig davon, ob das Ringband sich konisch nach der Seite hin erweitert, oder ob es zylindrisch ist, können die Codemarkierungen als parallele Linien entweder in axialer oder in umlaufender Richtung angeordnet sein.

Nach einer weiteren vorteilhaften Ausgestaltung der Erfindung sind mindestens zwei einander zugeordnete Datenringbänder nebeneinander am Gegenstand angeordnet und durch ineinandergreifende axiale Erhebungen bzw. Ausnehmungen gegeneinander verdrehgesichert. Hier gelten die gleichen obengenannten Gründe einer Lagefixierung wie bei Ringscheiben.

Nach einer weiteren vorteilhaften Ausgestaltung der Erfindung weisen die Datenträgerringe radial einseitig eine Öffnung auf, um mittels dieser Öffnung radial über ein Trägerteil, beispielsweise ein bereits eingeschraubtes Gewindeteil schiebbar zu sein oder um dadurch auf einen zylindrischen Abschnitt des Gegenstandes, diesen umgreifend, aufschnappbar zu sein.

Eine weitere vorteilhafte Ausgestaltung der Erfindung besteht in der Verwendung an einem Gasbehälter (Gasflasche) als Gegenstand, wobei die Datenträger vorzugsweise im Bereich des Auslaßventils des Gasbehälters (Gasflaschen) angeordnet sind. Besonders bei Gasbehältern müssen schon aus Sicherheitsgründen im Bereich des Auslaßventils Datenträger vorhanden sein, durch die Fehler beim Einsatz, d.h. beim Auffüllen usw., so weit wie möglich, unterbunden werden.

Hierbei sind nach einer vorteilhaften Ausgestaltung der Erfindung die Datenträger am Ventilkörper und/oder am Ventilhandrad angeordnet. Dazu können zylindrische Abschnitte am Ventilkörper von einem Ringband umspannt sein und die Ringscheibe im Handrad des Ventils befestigt sein. Es kann aber auch ein zylindrischer, insbesondere konischer Abschnitt am Handrad als Auflage eines Datenträgerringbandes dienen, dem beispielsweise eine, mit dem Ventilgewinde eingespannte, Ringscheibe zugeordnet ist.

Nach einer weiteren vorteilhaften Ausgestaltung der Erfindung, gemäß Datenträger am Handrad des Ventils, ist je ein Datenträger auf je einer der einander abgewandten Stirnseiten des Handrads angeordnet, insbesondere als Ringscheibe ausgebildet, die vorzugsweise in eine entsprechende Ringnut eingelegt ist. Der durch das Handrad verdeckte Datenträger kann erforderlichenfalls über einen Spiegel abgelesen werden.

Auch wenn mehrere ineinander gesteckte Ringe vorgesehen sind, genügt als freie Öffnung eine Breite, die dem bereits eingeschraubten Gewinde entspricht, während der Innendurchmesser wiederum den Außenabmessungen des Ringes entspricht, auf den dieser betrachtete Ring geschnappt werden soll.

Weitere Vorteile und vorteilhafte Ausgestaltungen der Erfindungen sind in der nachfolgenden Beschreibung, der Zeichnung und den Ansprüchen entnehmbar.

mehrere Ausführungsbeispiele des Gegenstandes der Erfindung sind in der Zeichnung dargestellt und im folgenden näher beschrieben. Es zeigen:
- Fig.1: ein erstes Ausführungsbeispiel des Gegenstandes der Erfindung im Teillängsschnitt;
- Fig. 2: eine erste Variante des ersten Ausführungsbeispiels im Längsschnitt;
- Fig. 3: eine zweite Variante des ersten Ausführungsbeispiels in verkleinertem Maßstab und im Querschnitt;
- Fig. 4: ein zweites Ausführungsbeispiel in der Draufsicht,
- Fig. 5 u. 6: ein drittes Ausführungsbeispiel in der Draufsicht und im Teilquerschnitt.

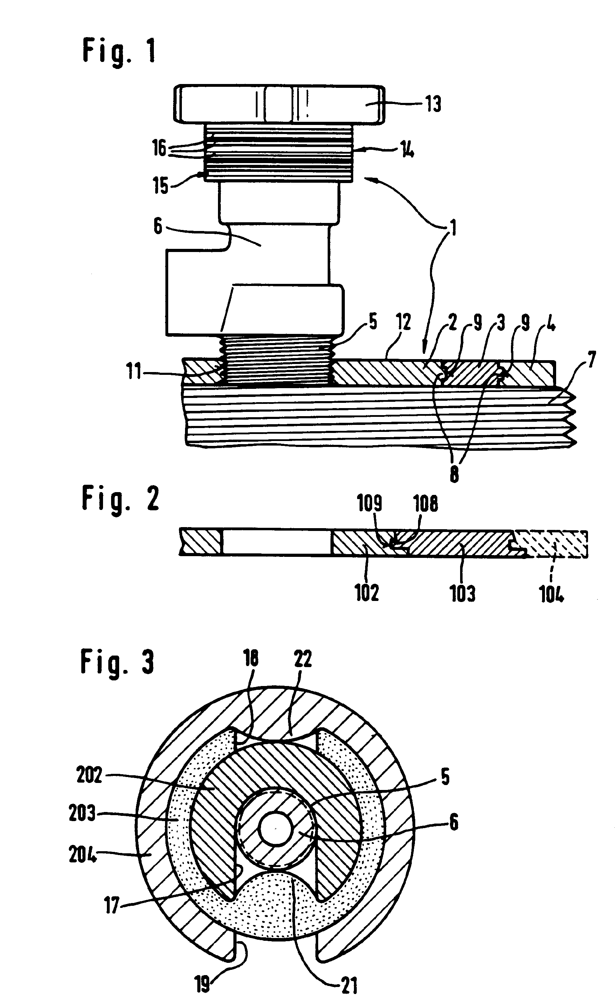

In Fig. 1 ist eine Kennzeichnungseinrichtung 1 dargestellt, die aus mehreren Datenträgerringen besteht, von denen drei ineinander gesteckte Ringscheiben 2, 3 und 4 über das Einschraubgewinde 5 eines Ventils 6 an den Auslaßstutzen 7 eines Behälters, beispielsweise einer Gasflasche, gespannt ist. In Fig. 1 sind das Ventil 6 und der Auslaßstutzen 7 in der Seitenansicht, die Ringscheiben 2, 3 und 4 im Schnitt dargestellt. Auf dem Auslaßstutzen 7 kann üblicherweise eine Abdeckkappe oder Schutzkappe geschraubt werden-. Die Ringscheiben 2 und 3 weisen auf ihrer radialen Außenmantelfläche Ringwülste 8 auf, die in entsprechende Innenringnuten 9 der Ringscheiben 3 und 4 greifen, so daß eine lösbare Schnappverbindung zwischen den drei Ringscheiben 2, 3 und 4 besteht. Die zentrale Bohrung 11 der kleinsten Ringscheibe 2 ist im Durchmesser geringfügig kleiner als der Außendurchmesser des leicht konisch ausgebildeten Einschraubgewindes 5. Hierdurch wird beim Einschrauben des Ventils 6 die Einspannwirkung der Ringscheiben 2 - 4 auf den Auslaßstutzen 7 erzielt. Auf der freien Stirnfläche 12 der drei Ringscheiben 2 - 4 sind ringförmig ausgebildete Barcodes oder Magnetcodes angeordnet, die maschinell entweder optisch oder magnetisch lesbar sind.

Am Handrad 13 des Ventils 6 ist, dem Behälter zugewandt, ein zylindrischer Abschnitt 14 vorhanden, auf dem ein Ringband 15 angeordnet ist, das ebenfalls als Datenring ein Teil der Rennzeichnungseinrichtung 1 bildet. Die Codemarkierungen sind hier als anlaufende Coderinge 16 eingeprägt. Der Abschnitt sowie das Ringband könnten jedoch andere konische, sich nach unten verengend, ausgebildet sein und die Codemarkierungen könnten als parallele, vertikale Linien verlaufen.

Alle vier Datenträgerringe 2, 3, 4 und 15 können voneinander unabhängige Aussagegruppen von Informationen enthalten, wobei beispielsweise die weiter äußeren Ringscheiben 3 und 4 vorzugsweise weniger langlebige Daten enthalten würden als die weiter innen gelegene Ringscheibe 2. Die Zusammenstellung der jeweils kennzeichnenden Ringscheiben 2, 3 und 4 und möglicherweise mit dem Ring 15 erfolgt entsprechend den durch Behälter und dessen Inhalt vorgegebene Daten, wobei eine Aussagegruppe beispielsweise den Behälter und eine andere den Inhalt und wiederum eine dritte den Abnahmer bzw. Verbraucher betreffen kann. Eine vierte Aussagegruppe könnte den Preis betreffen, wobei ohne Frage alle diese Aussagegruppen produktbezogen miteinander verknüpft sind, jedoch von Fall zu Fall anders lauten können. Je nach gewünschter Kombination können aus dem Lager der Datenträgerringe die herausgenommen und eingesetzt oder ausgetauscht werden, die den speziellen Fall betreffen. So ist es denkbar, daß die Ringscheibe 2 den Gasbehälter selbst betrifft, nämlich die alle zehn Jahre zu wiederholende Grundprüfung einer Gasflasche. Die Ringscheibe 3 hingegen kann die zulässsigen Füllmedien und Taragewichte betreffen, während die Ringscheibe 4 Codemarkierungen aufweist, die das aktuell gefüllte Medium und dessen Auffülldatum usw. betrifft. Der Datenträgerring 15 hingegen kann eine Aussage über den Preis enthalten, der je nach Abnehmerkreis natürlich unterschiedlich sein kann. Durch diese Art der Kombinationsmöglichkeit verschiedener Ringe kann die Lagerhaltung für eine derartige Rennzeichnungseinrichtung von Codemarkierungen enthaltenden Datenträgern enorm reduziert werden. Jeder für sich lagerbare Teil der Kennzeichnungseinrichtung, also jeder von dem Datenträger trennbare Ring, hat eine Halbierung der auf Lager zu haltenden Datenträgerringe zur Folge, da die Kombination durch Zuordnen zusammenstellbar ist und nicht mehr auf einem einzigen Ring geprägt sein muß.

In Fig. 2 ist eine Variante zu den Ringscheiben 2, 3 und 4 dargestellt, wobei diese mit 102, 103 und 104 bezeichneten entsprechenden Ringe eine andere Wulst-/Nutverbindung 108, 109 aufweisen. In dieser Variante ist beispielsweise die Ringscheibe 103 wesentlich breiter als die Ringscheibe 102 ausgebildetentsprechend der aufzunehmenden Daten. Die Ringscheibe 104 ist nur gestrichelt angedeutet als Hinweis dafür, daß sie nur im Bedarfsfall vorgesehen wird.

In Fig. 3 ist eine weitere Variante dieses ersten Ausführungsbeispiels gezeigt und zwar der Ringscheiben, die hier mit 202, 203 und 204 bezeichnet sind. Die Ringscheiben sind in dieser Variante seitlich offen ausgebildet, um so auch bei eingeschraubtem Ventil 6 über dessen Einschraubgewinde 5 geschoben werden zu können. Die Weite dieser radialen Öffnungen 17, 18 und 19 entspricht dem Durchmesser des Stutzens des Einschraubgewindes 5. Um eine einfache Art der Verriegelung gegen Herausfallen der radial offenen Ringe 202 - 204 zu erreichen, ist an dem jeweils den kleineren Ring umgreifenden Ring, in die Öffnung 17, 18 des kleineren Ringes hineintauchend, eine Nase 21 und 22 vorgesehen, deren Breite in etwa der Weite der zugeordneten radialen Öffnung 17, 18 entspricht. Die Nasen 21 und 22 wirken so einerseits als eine Art Verdrehsicherung der Ringe untereinander, andererseits aber auch als ein radialer Spielausgleich, nämlich dann, wie in Fig. 3 dargestellt, wenn die Nase 21 bis zum Einschraubgewinde 5 reicht und die Nase 22 bis an die äußere Mantelfläche der Ringscheibe 202. Wie in Fig. 3 durch die Schnittflächendarstellung gezeigt, können für die Ringscheiben unterschiedliche Materialien verwendet werden, z.B. bei den Ringscheiben 202 und 204 bestimmte Kunststoffe und bei der Ringscheibe 203 Metall, wobei Letztere zur Aufzeichnung von Magnetcodes geeignet wäre. Um ein axiales Gegeneinanderverschieben der Ringscheiben 202 - 204 zu verhindern, können diese wie bei den vorbeschriebenen Varianten zwischen den einander zugewandten radialen Mantelflächen Schnappverbindungen aufweisen.

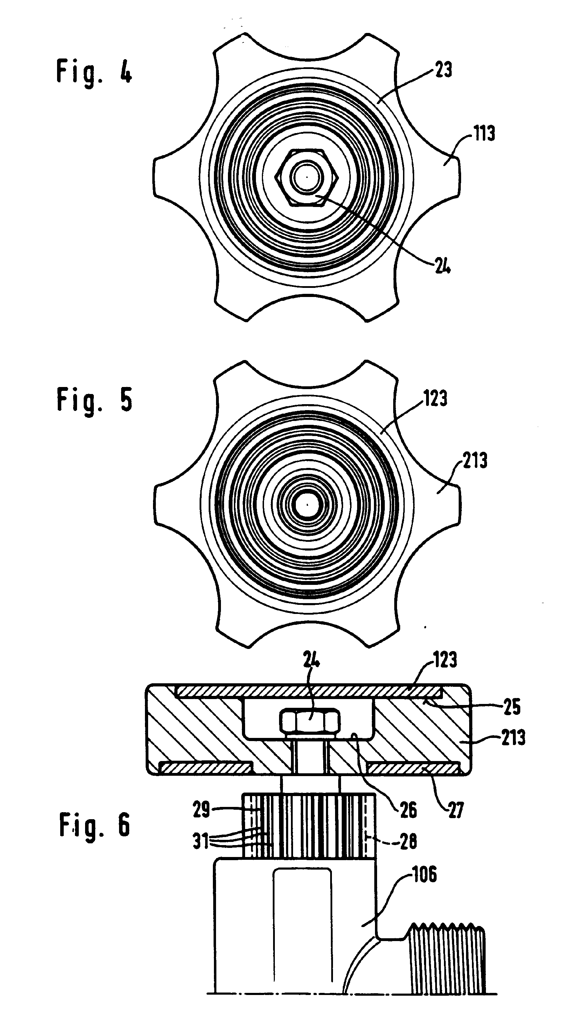

Bei dem in Fig. 4 dargestellten zweiten Ausführungsbeispiel ist auf der freien Stirnseite des Handrades 113 eine Ringscheibe 23 insbesondere mit der das Handrad am Ventil festspannenden Mutter 24 befestigt, wobei es sich bei diesem Datenträgerring 23 um mehrere ineinander geschnappte Ringe handeln kann oder um nur einen, der in Kombination mit anderen, dann entsprechend andere Aussagegruppen tragenden Ringen kombiniert ist. Erfindungsgemäß ist hier, daß die freie Stirnfläche eines Handrades zur Anordnung einer Datenträgerringscheibe genutzt wird. hierbei kann in dieser Stirnfläche eine entsprechende Absenkung vorgesehen sein, oder aber es kann die Scheibe einfach auf die Stirnfläche gelegt sein.

Bei dem in Fig. 5 und 6 dargestellten dritten Ausführungsbeispiel wird ebenfalls die Stirnfläche des Handrades 213 für die Anbringung einer Datenträgerscheibe 123 genutzt. In Fig. 5 ist das Handrad 213 in der Draufsicht, in Fig. 6 im Schnitt dargestellt. Die Datenträgerscheibe 123 ist in eine entsprechende axiale Ausnehmung 25 des Handrades 213 eingelassen und weist keine zentrale Öffnung auf. Durch diese Datenträgerscheibe 123 ist jedoch die Mutter 24 des Handrades 213 abgedeckt, die in einer entsprechenden Ausnehmung 26 untergebracht ist. Auf der der Scheibe 123 abgewandten Seite des Handrades 213 ist ein weiterer Datenträger als Ringscheibe 27 eingelassen für die Speicherung einer weiteren Aussagegruppe, wobei diese Ringscheibe 27 erforderlichenfalls über ein einen Spiegel aufweisendes Ablesegerät gelesen werden muß.

Das Ventil 106 weist bei diesem Ausführungsbeispiel einen zylindrischen Abschnitt 28 am Ventilgehäuse auf, über den ein bandförmiger Datenträgerring 29 gestülpt ist. Die Codemarkierungen 31 sind hier beispielsweise in axialer Richtung orientiert. Wie in Fig. 1 bis 3 mehrere Ringscheiben ineinandersteckbar sind, so können auch mehrere Ringbänder nebeneinander angeordnet und miteinander verkoppelt sein. Sie können beispielsweise aus zusammensteckbaren Zylinderteilen bestehen.

Alle in der Beschreibung den nachfolgenden Ansprüchen und der Zeichnung dargestellten Merkmale können sowohl einzeln als auch in beliebiger Kombination miteinander erfindungswesentlich sein.

### Bezugszahlenliste

- 1: Kennzeichnungseinrichtung
- 2, 102, 202: Ringscheibe
- 3, 103, 203: Ringscheibe
- 4, 104, 204: Ringscheibe
- 5: Einschraubgewinde
- 6, 106: Ventil
- 7: Auslaßstutzen
- 8, 108: Ringwulst
- 9, 109: Innenringnut
- 10:
- 11: zentrale Bohrung
- 12: freie Stirnfläche von 2 - 4
- 13, 113, 213: Handrad
- 14: zylindrischer beschnitt
- 15: bandförmiger Ring
- 16: Codering
- 17: radiale Öffnung
- 18: radiale Öffnung
- 19: radiale Öffnung
- 20:
- 21: Nase
- 22: Nase
- 23, 123: Datenträgerscheibe
- 24: Mutter
- 25: axiale Auszehrung
- 26: Ausnehmung
- 27: Ringscheibe
- 28: zylindrischer Abschnitt
- 29: bandförmiger Datenträgerring
- 30:
- 31: Codemarkierung

## Patentansprüche

1. Kennzeichnungseinrichtung für Gegenstände bestimmter Funktion mit mindestens zwei Codemarkierungen von Daten unterschiedlicher Aussagegruppen aufweisenden Datenträgern vorzugsweise zirkulärer Form, wobei die ablesbaren Daten (Information) der Aussagegruppen den Gegenstand und/oder dessen Funktion und gegebenenfalls Inhalt betreffen und einander zugeordnet sind und wobei die einander zugeordneten Datenträger lösbar, aber in ihrer räumlichen Anordnung relativ zueinander unveränderbar am Gegenstand angeordnet sind, dadurch gekennzeichnet, daß die richtige relative räumliche Anordnung der Datenträger (2, 3, 4, 15, 23, 27 und 29) zueinander zwangsweise erfolgt.

2. Kennzeichnungseinrichtung nach Anspruch 1, dadurch gekennzeichnet, daß mindestens zwei der einander zugeordneten Datenträger als Ringscheiben (2, 3, 4, 102, 103, 104, 202, 203, 204) ausgebildet sind, deren radiale Innen- und Außenabmessungen aufeinander abgestimmt ein Ineinanderstecken der Ringscheiben, nämlich jeweils eine kleinere Ringscheibe in die Innenöffnung einer größeren, ermöglicht, und daß für eine gemeinsame Ableseoberfläche (12) die Ringscheiben eine axial stirnseitige bzw. auf der Scheibe größten Durchmessers eine radialseitige Codemarkierung aufweisen.

3. Kennzeichnungseinrichtung nach Anspruch 2, dadurch gekennzeichnet, daß zwischen den einander zugewandten radialen Mantel- bzw. Bohrungsflächen der Ringscheiben Wulsterhebungen (8, 108) und Ringnuten (9, 109) vorhanden sind, die eine ein axiales gegeneinander Verschieben verhindernde Schnappverbindung bilden.

4. Kennzeichnungseinrichtung nach Anspruch 2 oder 3, dadurch gekennzeichnet, daß als Spiel- und Verdrehsicherung der Ringscheiben zueinander mindestens auf den einander zugewandten radialen Mantel- bzw. Bohrungsflächen der Ringscheiben (203, 204) Nasen (21, 22) an einer Scheibe vorhanden sind, die in entsprechende Ausnehmungen (17, 18) der anderen Scheibe greifen.

5. Kennzeichnungseinrichtung nach einem der vorhergehenden Ansprüche, dadurch gekennzeichnet, daß von den einander zugeordneten Datenträgern mindestens einer als zylindrisches oder konisches Datenringband (29, 15) ausgebildet ist, welches um einen entsprechend ausgebildeten Abschnitt (14, 28) einer Mantelfläche des Gegenstandes oder ein mit dem Gegenstand fest verbundenes Teil, wie Ventil (106) oder Handrad (13), gelegt ist.

6. Kennzeichnungseinrichtung nach Anspruch 5, dadurch gekennzeichnet, daß mindestens zwei einander zugeordnete Datenringbänder nebeneinander am Gegenstand angeordnet sind und durch Ineinandergreifende axiale Erhebungen bzw. Ausnehmungen gegeneinander verdrehgesichert sind.

7. Kennzeichnungseinrichtung nach einem der vorhergehenden Ansprüche, dadurch gekennzeichnet, daß mindestens ein Datenträger (15, 23, 29) einen optisch abtastbaren Strichcode enthält.

8. Kennzeichnungseinrichtung nach einem der vorhergehenden Ansprüche, dadurch gekennzeichnet, daß mindestens ein Datenträger eine Magnetspur für einen eingeprägten oder einprägbaren Magnetcode enthält.

9. Kennzeichnungseinrichtung nach einem der Ansprüche 2 bis 8, dadurch gekennzeichnet, daß die Datenträgerringe (202, 203, 204) radial einseitig eine Öffnung aufweisen, um mittels dieser Öffnung (17, 18, 19) radial über ein Trägerteil (6) schiebbar zu sein.

10. Kennzeichnungseinrichtung nach einem der vorhergehenden Ansprüche, gekennzeichnet durch die Verwendung an einem Gasbehälter (Gasflasche) als Gegenstand, wobei die Datenträger (2, 3, 4, 15, 27, 29) vorzugsweise im Bereich des Auslaßventils (6, 106) des Gasbehälters angeordnet sind.

11. Kennzeichnungseinrichtung nach Anspruch 10, dadurch gekennzeichnet, daß die Datenträger am Ventilkörper (6, 106) und/oder am Ventilhandrad (13, 213) angeordnet sind.

12. Kennzeichnungseinrichtung nach Anspruch 11, dadurch gekennzeichnet, daß je ein Datenträger (27, 123) auf je einer der einander abgewandten Stirnseiten des Handrades (213) angeordnet ist.

## Claims

1. Labelling device for objects with a definite function, with at least two code-markings of data belonging to data-carriers with different groups of information, preferably in circular form, with the readable data (information) of the information groups relating to the object and/or its function and possibly if relevant its contents, and the data being arranged facing one another, and with the data-carrier thus arranged being removable but unalterably fixed to the object in the spatial relationship relative to one another, characterised by the correct relative spatial arrangement of the data carriers (2, 3, 4, 15, 23, 27 and 29) being necessarily arranged to face one another.

2. Labelling device along the lines of Claim 1 characterised by at least two of the data-carriers arranged facing one another take the form of annular rings (2, 3, 4, 102, 103, 104, 202, 203, 204) the inner and outer radial dimensions of which are related to one another in such a way as to permit the annular rings to be fitted into one another, to be specific with the smaller or each ring being fitted into the internal aperture of the larger one, and by the annular rings having a code marking on the axial face or on the radial side of the ring with the largest diameter in order to form a common display surface (12).

3. Labelling device along the lines of Claim 2 characterised by protuberances (8, 108) and ring grooves (9, 109) being present between the radial circumferential or bore surfaces of the annular rings facing towards one another which form a snap connection to prevent axial displacement in relation to one another.

4. Labelling device along the lines of Claim 2 or 3 characterised by probosces (21, 22) being present on one annular ring to secure it against play or rotation in relation to the others at least on the radial circumferential or bore surfaces of the annular rings facing towards one another (203, 204), which probosces fit into the corresponding depressions (17, 18) in the other ring.

5. Labelling device along the lines of one of the foregoing Claims characterised by at least one of the data carriers arranged facing one another takes the form of a cylindrical or conical data ring band (29, 15) laid around a correspondingly shaped section (14, 28) of a radial circumference of the object or a part joined firmly to the object such as a valve (106) or hand-wheel (13).

6. Labelling device along the lines of Claim 5 characterised by at least two of the data ring bands arranged to face one another are also arranged next to one another on the object and can be prevented from rotating in relation to one another through axial protuberances or depressions.

7. Labelling device along the lines of one of the foregoing Claims characterised by at least one data-carrier (15, 23, 29) containing an optically readable bar-code.

8. Labelling device along the lines of one of the foregoing Claims characterised by at least one of the data carriers containing a magnetic track for an recorded or recordable magnetic code.

9. Labelling device along the lines of one of the Claims 2 to 8 characterised by data carrier rings (202, 203, 204) having an opening radially on one side in order to be movable radially over a carrier (6) by means of this opening (17, 18, 19).

10. Labelling device along the lines of one of the foregoing Claims characterised by its being used on a gas container (gas bottle) as the object with the data carriers (2, 3, 4, 15, 27, 29) preferably being arranged in the vicinity of the outlet valve (6, 106) of the gas container.

11. Labelling device along the lines of Claim 10 characterised by the data carriers being arranged on the body of the valve (6, 106) and/or on the valve hand-wheel ( 13, 213).

12. Labelling device along the lines of Claim 11 characterised by one data carrier in each case (27, 123) being arranged on the front face of the hand-wheel (213) facing away from the other one.

## Revendications

1. Dispositif d'étiquetage conçu pour des objets d'une fonction précise, avec des supports de données de préférence de forme circulaire, présentant au moins deux marquages de code de données de catégories d'information différentes étant entendu que les données lisibles (information) des catégories d'information concernent l'objet et/ou sa fonction et son contenu le cas échéant et qu'elles sont coordonnées les unes aux autres et étant entendu aussi que les supports de données coordonnés les uns aux autres sont disposés sur l'objet de sorte à pouvoir en être détachés, mais dont la disposition dans l'espace des uns par rapport aux autres ne peut relativement pas être modifiée, caractérisé par le fait que la disposition correcte relative dans l'espace des supports de données (2, 3, 4, 15, 23, 27 et 29) les uns par rapport aux autres est contraignante.

2. Dispositif d'étiquetage conforme à la revendication 1, caractérisé par le fait qu'au moins deux des supports de données coordonnées l'un à l'autre ont une configuration de disque annulaire (2, 3, 4, 102, 103, 104, 202, 203, 204) dont les dimensions radiales intérieures et extérieures harmonisées les unes avec les autres autorisent un emboîtement des disques annulaires, à savoir respectivement un disque annulaire plus petit dans l'orifice intérieur d'un disque plus grand, et par le fait que pour une surface de lecture (12) commune les disques annulaires présentent un marquage de code sur la face axiale ou sur le disque accusant un diamètre supérieur, un marquage sur la surface radiale.

3. Dispositif d'étiquetage conforme à la revendication 2, caractérisé par le fait qu'entre les surfaces de l'enveloppe ou qu'entre les surfaces d'alésage radiales des disques annulaires orientées les unes vers les autres, il existe des renflements (8, 108) et des rainures annulaires (9, 109) qui constituent un assemblage à enclenchement empêchant un décalage axial des uns par rapport aux autres.

4. Dispositif d'étiquetage conforme à la revendication 2 ou 3, caractérisé par le fait qu'à titre de sécurité anti-jeu et anti-torsion des disques annulaires les uns par rapport aux autres, il existe au moins sur les surfaces de l'enveloppe ou sur les surfaces d'alésage radiales des disques annulaires orientées les unes vers les autres (203, 204), des nez (21, 22) sur un disque qui mordent dans les évidements (17, 18) correspondants de l'autre disque.

5. Dispositif d'étiquetage conforme à l'une des revendications précédentes, caractérisé par le fait qu'au moins un des supports de données coordonnés les uns aux autres a la forme d'une bande annulaire de données (29, 15) cylindrique ou conique placée autour d'une section (14, 28) d'une surface d'enveloppe de l'objet, ayant une configuration correspondante ou autour d'une pièce solidement reliée à l'objet, telle qu'une soupape (106) ou qu'un volant (13).

6. Dispositif d'étiquetage conforme à la revendication 5, caractérisé par le fait qu'au moins deux bandes annulaires de données coordonnées l'une à l'autre sont disposées l'une à côté de l'autre sur l'objet et qu'elles sont à l'abri d'une torsion réciproque compte tenu des élévations ou des évidements axiaux s'engrenant les uns dans les autres.

7. Dispositif d'étiquetage conforme à l'une des revendications précédentes, caractérisé par le fait qu'au moins un support de données (15, 23, 29) comporte un code barres balayable optiquement.

8. Dispositif d'étiquetage conforme à l'une des revendications précédentes, caractérisé par le fait qu'au moins un support de données renferme une piste magnétique pour un code magnétique incrusté ou incrustable.

9. Dispositif d'étiquetage conforme à l'une des revendications 2 à 8, caractérisé par le fait que les anneaux des supports de données (202, 203, 204) présentent radialement et d'un seul côté une ouverture afin, précisément par cette ouverture (17, 18, 19), de pouvoir coulisser radialement sur une pièce support (6).

10. Dispositif d'étiquetage conforme à l'une des revendications précédentes, caractérisé par son utilisation sur un réservoir à gaz (bouteille de gaz), l'objet, étant entendu que les supports de données (2, 3, 4, 15, 27, 29) sont disposés de préférence dans la zone de la soupape de sortie (6, 106) du réservoir à gaz.

11. Dispositif d'étiquetage conforme à la revendication 10, caractérisé par le fait que les supports de données sont agencés sur le corps de soupape (6, 106) et/ou sur le volant de la soupape (13, 213).

12. Dispositif d'étiquetage conforme à la revendication 11, caractérisé par le fait que respectivement un support de données (27, 123) est disposé sur respectivement une des faces du volant (213) opposées l'une à l'autre.
